# EUROPEAN PATENT APPLICATION

(11) **EP 4 287 669 A1**
(43) Date of publication of application: **06.12.2023**
(21) Application number: 23176693.2
(22) Date of filing: 01.06.2023
(51) Int. Cl.: H04W 4/80, H04W 12/06

(54) **SHORT RANGE DATA TRANSFER IN WIRELESS CARGO APPLICATIONS**

(30) Priority: 01.06.2022 US 202217829949
(71) Applicant: Goodrich Corporation, Charlotte, NC 28217-4578 (US)
(72) Inventor: SETTERSTROM, Kevin, Jamestown, ND, 58401 (US); HARMS, Scott P., Ypsilanti, ND, 58497 (US)
(74) Representative: Dehns

(57) **Abstract**

A controller is disclosed herein. The controller includes a processor and a memory operatively coupled to the processor. The memory includes instructions stored thereon that, when executed by the processor, cause the processor to receive authentication credentials for controlling a cargo handling system (200) via an access point (208). The access point uses a short-range wireless communication protocol. The instructions further cause the processor to connect to the cargo handling system via a wireless communication protocol, receive control of the cargo handling system, and send commands to the cargo handling system.

## Description

### FIELD

The present disclosure generally relates to cargo loading systems, and more specifically to the accessing and controlling of cargo loading systems.

### BACKGROUND

Generally, cargo loading systems are controlled using physical controls located in cargo compartment of an aircraft with some cargo loading systems being controlled by wireless devices connected to the cargo loading system. Generally, the wireless devices do not need to be physically present in the cargo compartment to control the cargo loading system. This creates a potential safety and security problem for the cargo loading systems, allowing users to access and/or operate the cargo loading system without being physically present in the cargo compartment.

### SUMMARY

A controller is disclosed herein. The controller includes a processor and a memory operatively coupled to the processor. The memory includes instructions stored thereon that, when executed by the processor, cause the processor to receive authentication credentials for controlling a cargo handling system via an access point. The access point uses a short-range wireless communication protocol. The instructions further cause the processor to connect to the cargo handling system via a wireless communication protocol, receive control of the cargo handling system, and send commands to the cargo handling system. In various embodiments, the short-range wireless communication protocol is a near field communication protocol.

In various embodiments, the instructions when executed by the processor further cause the processor to send a request for normal access and control of the cargo handling system. In various embodiments, the instructions when executed by the processor further cause the processor to send a request for advanced access and control of the cargo handling system. In various embodiments, the instructions when executed by the processor further cause the processor to transmit a cargo load plan to the cargo handling system via the short-range wireless communication protocol.

In various embodiments, the instructions when executed by the processor further cause the processor to receive at least one of maintenance logs, use logs, and cargo information from the cargo handling system via the short-range wireless communication protocol. In various embodiments, the instructions when executed by the processor further cause the processor to receive from the cargo handling system via the access point access to a zone of the cargo handling system, the zone being a subset of the cargo handling system. In various embodiments, the access to the zone of the cargo handling system is exclusive access to the zone of the cargo handling system. In various embodiments, the instructions when executed by the processor further cause the processor to request from the cargo handling system access to a second zone, the second zone being different than the first zone, the request being via a second access point using the short-range wireless communication protocol, the second access point being different the access point. The processor further receives access to the second zone, wherein the controller releases access to the zone in response to receiving access to the second zone.

Also disclosed herein is a cargo handling system including a conveyance surface configured to move cargo, a near field communication (NFC) access point, an NFC enabled device configured to connect to the cargo handling system in response to receiving authentication information from the NFC access point. The NFC enabled device configured to transmit and receive information about the conveyance surface via the NFC access point.

In various embodiments, the NFC enabled device includes a cargo load plan, the NFC enabled device configured to transmit the cargo load plan to the cargo handling system. In various embodiments, the cargo handling system is configured to verify the cargo load plan. In various embodiments, the NFC enabled device is configured to receive data about the conveyance surface from the cargo handling system, the data being received by a wireless connection between the NFC access point and the NFC enabled device. In various embodiments, the data includes at least one of maintenance data, lifecycle data, and cargo status.

Also disclosed herein is a method of controlling access to a cargo loading system. The method includes transmitting, by a processor, a first set of credentials to connect a controller to the cargo loading system using a first near field communication (NFC) access point, connecting, by the processor, the cargo loading system to the controller in response to receiving the first set of credentials from the controller, and receiving, by the processor, instructions to operate the cargo loading system from the controller.

In various embodiments, the method further includes transmitting, by the processor, a second set of credentials to control a zone within the cargo loading system to the controller using a second near field communication (NFC) access point, granting, by the process, control of the zone to controller, and restricting, by the process, control of the zone to other controllers.

In various embodiments, the method further includes receiving, by the processor, a cargo load plan for the cargo loading system from the controller. In various embodiments, the method further includes transmitting, by the processor, maintenance data for the cargo loading system via the first NFC access point in response to a request from the controller. In various embodiments, the method further includes receiving, by the processor, an authentication code from the controller and granting, by the processor, advanced access to the cargo loading system in response to receiving the authentication code.

In various embodiments, the method further includes transmitting, by the processor, a second set of credentials to connect a second controller to the cargo loading system using the first NFC access point, receiving, by the processor, a request for access to a zone of the cargo loading system from the second controller through a second NFC access point, and restricting, by the processor, control of the zone to the second controller in response to the request.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates a perspective view of an aircraft being loaded, in accordance with various embodiments.
FIGS. 2A, 2B, 2C, and 2D illustrate schematic views of a cargo loading system within of a cargo compartment, in accordance with various embodiments.
FIGS. 3A, 3B, and 3C illustrate devices used to control a cargo loading system.
FIGS. 4A, 4B, and 4C illustrate devices and a schematic view for transmitting data to a cargo loading system, in accordance with various embodiments.
FIGS. 5A, 5B, 5C, and 5D illustrate schematic views of multiple user control of control zones within a cargo handling system, in accordance with various embodiments.
FIG. 6 illustrates a flow diagram of controlling access to a cargo loading system, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the invention as defined by the claims. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

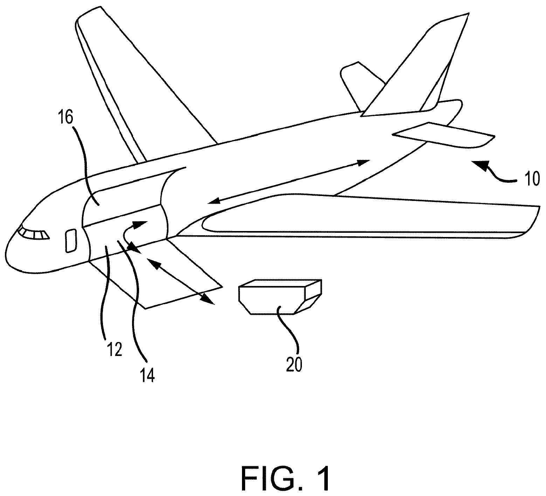

With reference to Figure 1, a schematic view of an aircraft 10 having a cargo deck 12 located within a cargo compartment 14 is illustrated, in accordance with various embodiments. The aircraft 10 may comprise a cargo load door 16 located, for example, at one side of a fuselage structure of the aircraft 10. A unit load device (ULD) 20, in the form of a container or pallet, for example, may be loaded through the cargo load door 16 and onto the cargo deck 12 of the aircraft 10 or, conversely, unloaded from the cargo deck 12 of the aircraft 10. In general, ULDs are available in various sizes and capacities, and are typically standardized in dimension and shape. Once loaded with items destined for shipment, the ULD 20 is transferred to the aircraft 10 and then loaded onto the aircraft 10 through the cargo load door 16 using a conveyor ramp, scissor lift or the like. Once inside the aircraft 10, the ULD 20 is moved within the cargo compartment 14 to a final stowed position. Multiple ULDs may be brought on-board the aircraft 10, with each ULD 20 being placed in a respective stowed position on the cargo deck 12. After the aircraft 10 has reached its destination, each ULD 20 is unloaded from the aircraft 10 in similar fashion, but in reverse sequence to the loading procedure. To facilitate movement of the ULD 20 along the cargo deck 12, the aircraft 10 may include a cargo handling system as described herein in accordance with various embodiments.

In various embodiments, aircraft 10 may include a second cargo load door aft of the wings of aircraft 10. Cargo may be loaded through the second cargo load door and onto cargo deck 12. In various embodiments, second cargo load door may open to a second cargo compartment that is separated from cargo compartment 14.

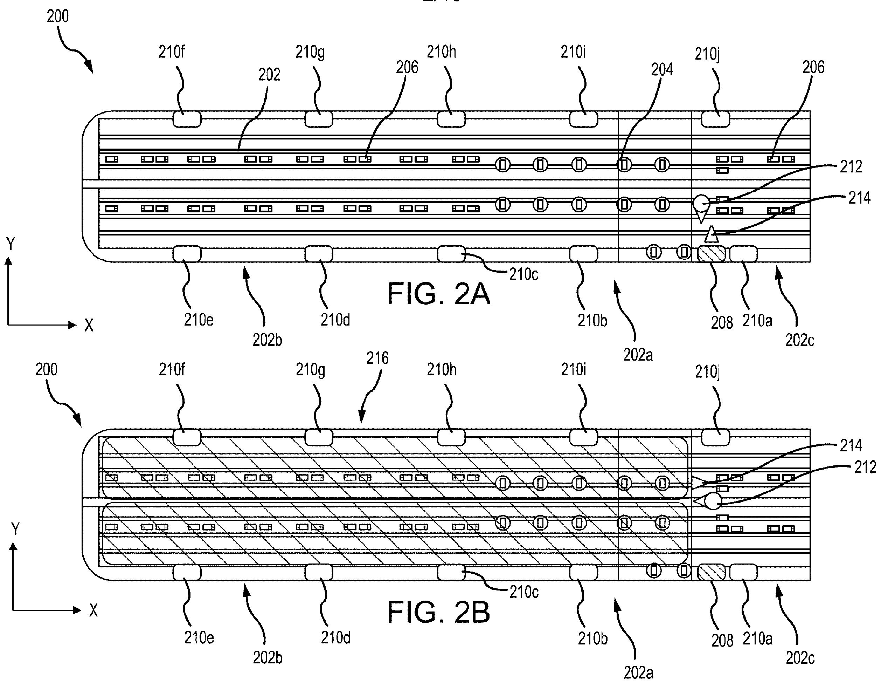

Referring now to FIGS. 2A-2D, in accordance with various embodiments, a top-down schematic view of a cargo loading system 200 is illustrated. Cargo loading system 200 may be located within cargo compartment 14 and on cargo deck 12, as illustrated in FIG. 1. Cargo loading system 200 provides a conveyance surface 202 configured to move cargo (e.g., ULD 20) within cargo compartment 14. In various embodiments, conveyance surface 202 may be divided into multiple sections, such as section 202a, section 202b, and section 202c. As illustrated in FIGS. 2A and 2B, section 202a is a ball panel including omnidirectional rollers 204 configured to receive cargo (e.g., ULD 20) laterally (e.g., the y-axis) and move cargo move the cargo longitudinally (e.g., the x-axis) within cargo compartment 14. Section 202b includes unidirectional rollers 206 and is located forward (e.g., the negative x-direction) of section 202a and is configured to move the cargo longitudinally (e.g., the x-axis) within cargo compartment 14. Section 202c includes unidirectional rollers 206 and is located aft (e.g., the x-direction) of section 202a and is configured to move the cargo longitudinally (e.g., the x-axis) within cargo compartment 14.

Cargo loading system 200, including conveyance surface 202, may be controlled by a cargo system wireless control network (e.g., WIFI, Bluetooth, etc.). The cargo system wireless control network allows a user to control cargo loading system 200 using a wireless device, or controller. Generally, a user may manually authenticate the controller, or device, with the cargo system wireless control network by entering provided credentials, or authentication, for access to the cargo system wireless control network. Furthermore, the range of the cargo system wireless control network allows a user to continue to control cargo loading system 200 when not physically present in cargo compartment 14. This ability for unattended, or absent, use may create safety and security risks.

Described herein and below, in various embodiments, is a second system that may be integrated with the cargo system wireless control network to provide credentials to a user device, or controller, using a short-range wireless communication protocol. In various embodiments, the credentials may be one time use credentials. In various embodiments, the user access, and credentials, may time out after a specific period of time. As will be discussed below, the use of the short-range wireless communication protocol to provide credentials and authentication to access the cargo system wireless control network improves the security of cargo loading system 200 and the safety of the users of cargo loading system 200.

Cargo loading system 200 further includes a cargo compartment network access point, or access point 208, and cargo zone access points, or zone access points 210a, 210b, 210c, 210d, 210e, 210f, 210g, 210h, 210i, and 210j. Access point 208 and zone access points 210a-210j may use a short-range wireless communication protocol. In various embodiments, access point 208 and zone access points 210a-210j may use near field communication (NFC) access points. NFC is a form of wireless communication that is designed to operate within approximately 10 cm (4 inches) distance or less and operates at a frequency of 13.56 MHz on ISO/IEC 18000-3 air interface with a data rate of about 106 kbit/s to about 424 kbit/s. In various embodiments, NFC may be passive, where specific information can be encoded onto unpowered embedded equipment and thereafter transfer data to a powered device. In various embodiments, NFC may be active where both devices are powered and designed to transfer data between each other when the connection is established. In various embodiments, NFC standards ISO/IEC 14443 and Felica, ISO/IEC 18092, and/or ISO/IEC 21481 may be used.

Access point 208 and zone access points 210a-210j may be used in place of traditional switches and controls that are typically mounted to walls of aircraft 10. In various embodiments, access point 208 and zone access points 210a-210j may be used in conjunction with traditional switches and controls, allowing operators to use either for controlling cargo loading system 200. Access point 208 provides improved security for accessing and controlling cargo loading system 200.

A user 212 (e.g., operator) may use a device 214 to communicate with access point 208 and zone access points 210a-210j. Device 214 may be any NFC compatible device capable of communicating with access point 208 and zone access points 210a-210j. Device 214 may read and/or write data to access point 208 or one of zone access points 210a-210j in response to being brought near (e.g., 10 cm or 4 inches) access point 208 or one of zone access points 210a-210j. After entering cargo compartment 14, user 212 approaches access point 208 and places device 214 next to or near access point 208. Access point 208 communicates information to device 214 in response to device 214 being near access point 208. The information may be pairing credentials used to connect device 214 to cargo loading system 200. Once device 214 is connected to cargo loading system 200, device 214 may control cargo loading system 200, and more specifically conveyance surface 202. As illustrated in FIG. 2B, device 214 is configured to control zone 216 which is a subset of conveyance surface 202. As illustrated, zone 216 includes section 202a and section 202b. In various embodiments, conveyance surface 202 may be divided into one or more zones, each zone controlling a subset of conveyance surface 202. Authentication to control a specific zone may be provided by zone access points 210a-210j, as will be described in further detail below.

Device 214 may be configured to receive network authentication information from access point 208 to connect to a cargo loading system network. Connecting cargo loading system may enable device 214 to control cargo loading system 200. For example, cargo loading system 200 may be controlled over a Wi-Fi connection. Access point 208 provides authentication information. The authentication information provided by access point 208 may be a one-time use password. This ensures that user 212 is near or in the cargo compartment (e.g., compartment 14) before allowing user 212 to control cargo loading system 200. In various embodiments, aircraft 10 may include multiple independent cargo compartments, each with cargo loading system 200. Providing access to control cargo loading system 200 via access point 208 requires that user 212 be in the compartment in which cargo loading system 200 is located before connecting to cargo loading system 200. This further ensures the security and safety of operators in each compartment of aircraft 10 during loading and unloading operations.

Furthermore, device 214 may be configured to receive authentication information for a specific zone within cargo loading system 200 in response to communicating with one of zone access points 210a-210j. For example, device 214 may receive authentication credentials for a specific zone within cargo loading system 200 from one of access points 210a-210j in response to being placed near (e.g., within 10 cm or 4 inches) of zone access point 210a-210j. The authentication credentials may be a one-time password communicated to device 214 from zone access point 210a-210j granting access to control the selected zone. The zone of the cargo loading system 200 is selected by placing device 214 near the zone access point (e.g., zone access point 210a-210j) associated with that zone. After connecting to the selected zone, device 214 may control that zone of cargo loading system 200 exclusively with all other users and devices locked out or restricted from controlling the zone. Preventing devices other than the authenticated device 214 from controlling a particular zone of the cargo loading system 200 improves the safety of the users. In various embodiments, cargo loading system 200 may require device 214 to re-authenticate after a period of time has passed, such as for example, 10 minutes. In various embodiments, cargo loading system 200 may require device 214 to re-authenticate after a period of inactivity, such as for example, 5 minutes.

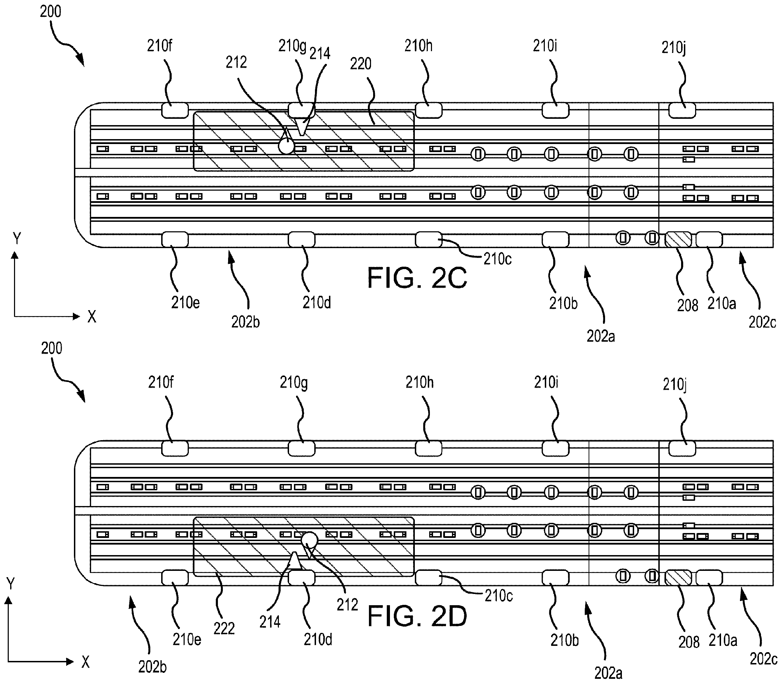

For example, as illustrated in FIG. 2C, after connecting to cargo loading system 200, user 212 may authenticate device 214 at zone access point 210g to gain control of a first zone 220. Doing so will lock out first zone 220 from control by another user (e.g., wall controls) and/or device (e.g., another device 214). This allows multiple users and/or devices to operate one or more zones within cargo loading system 200. As illustrated, first zone 220 is located between zone access points 210f and 210h and is about one-half, the top half, the lateral width (e.g., the y-axis) of cargo loading system 200. In various embodiments, first zone 220 may be sized differently including longer in the longitudinal direction (e.g., the x-axis) and/or wider and/or narrower in the lateral direction (e.g., the y-axis). As illustrated in FIG. 2D, user 212 may place device 214 near zone access point 210d to authenticate device 214 to control a second zone 222. This removes control of first zone 220 from device 214 and gives control of second zone 222 to device 214. Again, this locks second zone 222 from being controlled by another user and/or device. As illustrated, second zone 222 is located between zone access points 210c and 210e and is about one-half, the bottom half, the lateral width (e.g., the y-axis) of cargo loading system 200. In various embodiments, second zone 222 may be sized differently including longer in the longitudinal direction (e.g., the x-axis) and/or wider and/or narrower in the lateral direction (e.g., the y-axis)

In various embodiments, device 214 may communicate information, such as a cargo load plan, to cargo loading system 200 via access point 208. Generally, the cargo load plan is given to an operator as a sheet of paper or on a tablet that is pre-loaded with the cargo load plan, but that is not connected to the cargo loading system 200. NFC provides a secure communication path to load the cargo load plan to the correct compartment (e.g., compartment 14) of the correct aircraft (e.g., aircraft 10). This ensures that the correct load plan is being used for the cargo compartment and aircraft. In various embodiments, user 212 and/or cargo loading system 200 may verify the cargo loading plan is at the correct aircraft and cargo compartment. The cargo load plan may be transferred from an NFC card, tablet, phone, or other device to cargo loading system 200 via access point 208. Storing the cargo load plan on cargo loading system 200 enables the cargo loading system 200 to be used for additional features such as cargo tracking, cargo tracing, load verification, and others.

In various embodiments, device 214 may receive information, such as maintenance data, lifecycle data, etc., from cargo loading system 200 via access point 208. Using NFC to communicate the information improves the security of data transfer and reduces errors in transfer. Device 214 receiving the data is located near (e.g., within 10 cm or 4 inches) of access point 208, reducing the ability for another device to intercept the information. Furthermore, it ensures that the data being collected is associated with the specific cargo loading system (e.g., cargo loading system 200) of the specific compartment (e.g., compartment 14) of the specific aircraft (e.g., aircraft 10) in which user 212 is located.

In various embodiments, access point 208 may be used to authenticate different users and access levels. Generally, there are at least two levels of operators of cargo loading system 200. A cargo operator who is responsible for loading and unloading cargo using cargo loading system 200 has Normal, or general, control of the cargo loading system. A maintenance operator generally has advanced, or special, access to cargo loading system 200, including advanced control of the cargo loading system. Generally, the maintenance operator enters a passcode into a device to access the advanced features of cargo loading system 200. As disclosed herein, the maintenance operator may use an NFC card (e.g., ID badge) or device 214 to authenticate using access point 208. For example, the device 214 receives advanced access to cargo loading system 200 in response to being placed near access point 208. In various embodiments, this may unlock features within software stored on device 214 allowing the maintenance operator to perform tasks not available to other operators.

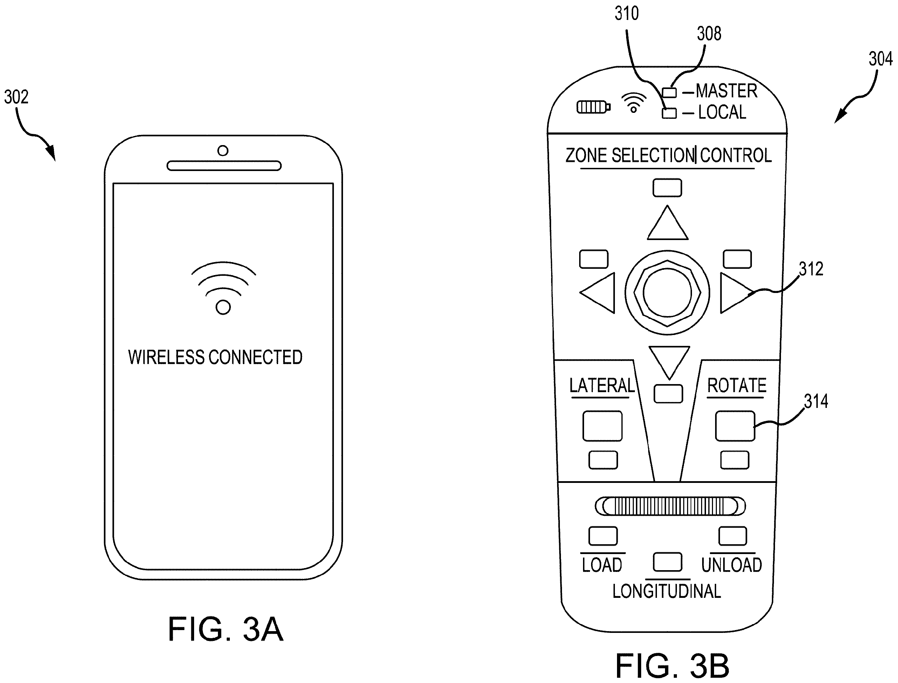

Referring now to FIGS. 3A-3C, in accordance with various embodiments, a smart phone 302, a controller 304, and a tablet 306 are illustrated. Smart phone 302, controller 304, and tablet 306 may be examples of device 214. FIG. 3A illustrates smart phone 302 as being connected to cargo loading system 200. Smart phone 302 may be a personal phone or a company phone. Smart phone 302 is NFC enabled and includes specific software configured to communicate with, and control, cargo loading system 200.

FIG. 3B illustrates custom controller 304 designed and configured for use with cargo loading system 200. Controller 304 is NFC enabled and configured to automatically connect to cargo loading system 200 in response to being near access point 208. Controller 304 includes buttons and controls for using cargo loading system 200. For example, a master button 308 may allow user 212 to control the operation of loading and unloading a cargo compartment using cargo loading system 200. A local button 310 may be used to restrict controller 304 to control only a particular zone of cargo loading system 200, as will be discussed in further detail below. Arrow buttons 312 may be used to control the movement of cargo within cargo loading system 200. Rotate buttons 314 may be used to rotate cargo within section 202b before storing cargo. These are a few examples of buttons that may be on controller 304. There may be more or fewer buttons on controller 304 as provided for use with cargo loading system 200.

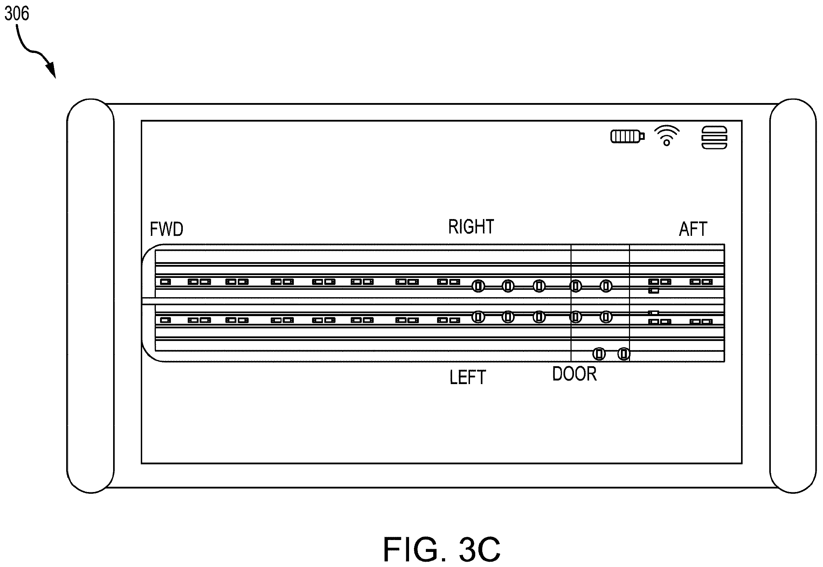

FIG. 3C illustrates tablet 306 as connected to cargo loading system 200 and including a layout of cargo loading system 200. Tablet 306 is NFC enabled and includes software similar to smart phone 302 to communicate with, and control, cargo loading system 200. In various embodiments, tablet 306 may provide more functionality than smart phone 302.

Each of smart phone 302, controller 304, and tablet 306 may be granted access to control cargo loading system 200 via access point 208 and zone access points 210a-210j. Device 214 (e.g., smart phone 302, controller 304, tablet 306, etc.) may comprise one or more processors configured to implement various logical operations in response to execution of instructions, for example, instructions stored on a non-transitory, tangible, computer-readable medium. The one or more processors can be a general purpose processor, a microprocessor, a microcontroller, a digital signal processor (DSP), an application specific integrated circuit (ASIC), a field programmable gate array (FPGA) or other programmable logic device, discrete or transistor logic, discrete hardware components, or any combination thereof. Device 214 may further comprise memory to store data, executable instructions, system program instructions, and/or controller instructions to implement the control logic of device 214.

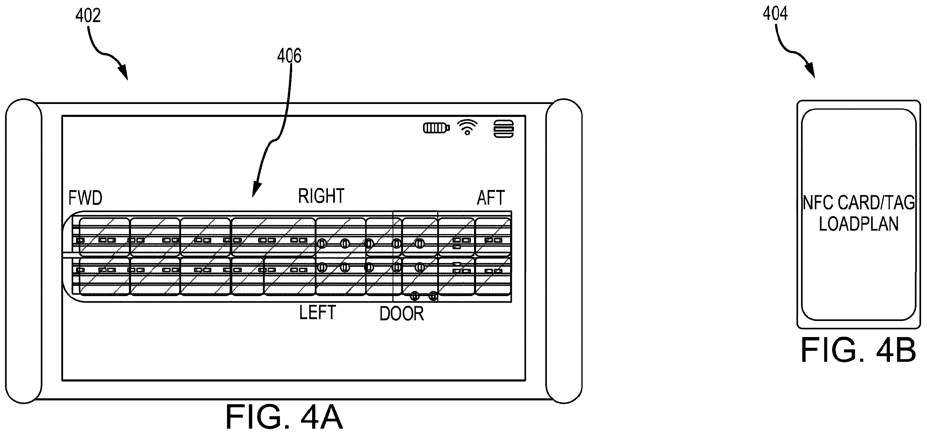

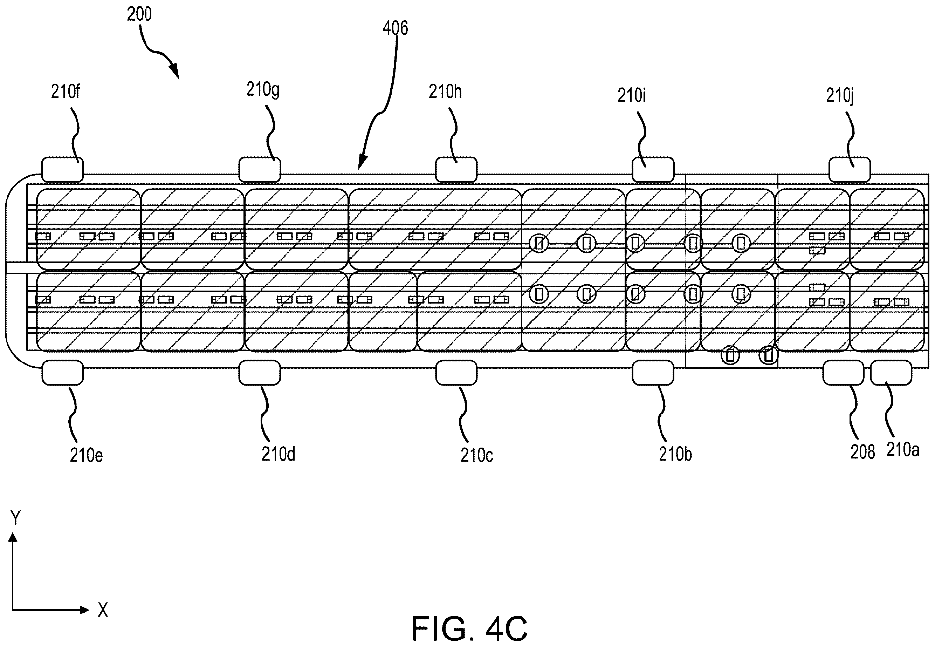

Referring to FIGS. 4A-4C, in accordance with various embodiments, a tablet 402, an NFC card 404, and a top-down schematic view of a cargo loading system 200 are illustrated. Tablet 402 is displaying cargo load plan 406. Cargo load plan 406 may be written to NFC card 404 by tablet 402. In various embodiments, cargo load plan 406 may be written to NFC card 404 at any compatible computer or device. Cargo loading system 200 includes, as described above, access point 208 and zone access points 210a-210j. Tablet 402, or NFC card 404, may transfer cargo load plan 406 to cargo loading system 200 via access point 208. In various embodiments, zone access points 210a-210j may be configured to receive cargo load plan 406 from tablet 402, NFC card 404, among others. FIG. 4C illustrates cargo load plan 406 with respect to cargo loading system 200, as received from tablet 402, or NFC card 404.

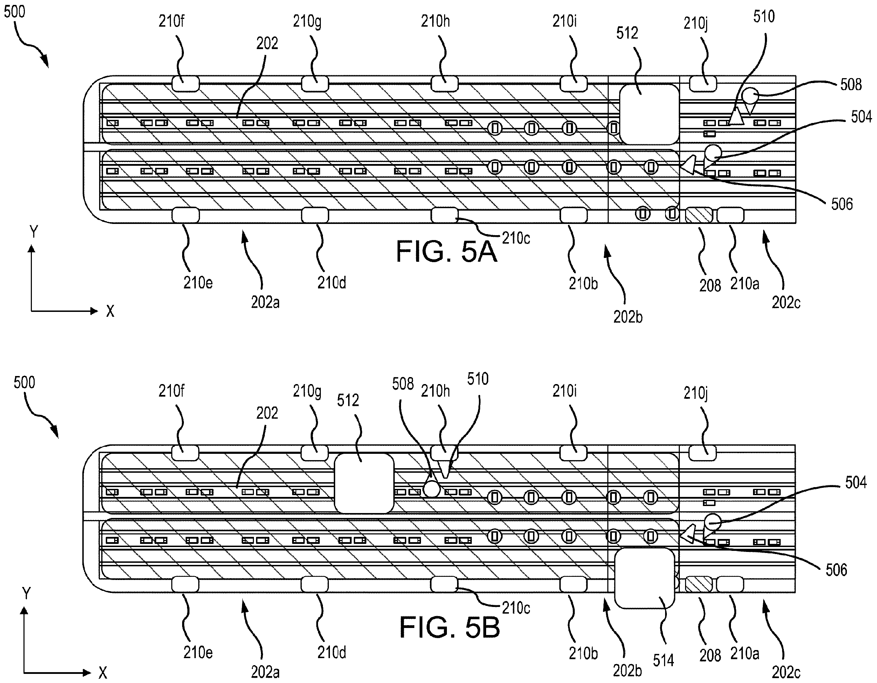

Referring now to FIGS. 5A-5D, in accordance with various embodiments, a top-down schematic view of a cargo loading system 200 is illustrated. Cargo loading system 500 includes access point 208, zone access points 210a-210j, and a first zone 502. First zone 502, as illustrated, includes sections 202a and 202b. In various embodiments, first zone 502 may include sections 202a, 202b, and 202c. A first user 504 having a first device 506 and a second user 508 having a second device 510 are working with cargo loading system 200 to load cargo. First device 506 and second device 510 may be examples of device 214 previously described. In various embodiments, first device 506 and second device 510 may be one of smart phone 302, controller 304, and tablet 306.

Referring to FIG. 5A, first user 504 places first device 506 near (e.g., within 10 cm or 4 inches) access point 208 where first device 506 and access point 208 communicate via NFC. Access point 208 provides authentication information to first device 506 permitting first device 506 to connect to cargo loading system 200. Additionally, first device 506 may be authenticated as a master controller, controlling all zones of cargo loading system 200. In various embodiments, first user 504 may enable first device 506 as master controller. In various embodiments, first device 506 is the first device to connect to cargo loading system 200 and is automatically made the master controller. First user 504 may now use first device 506 to control cargo loading system 200 to load and place cargo.

First user 504, using first device 506, loads a first cargo 512 laterally (e.g., the y-direction) onto cargo loading system 200, and more specifically onto section 202b. First user 504 may position first cargo 512 to be moved longitudinally (e.g., the x-direction) along cargo loading system 200.

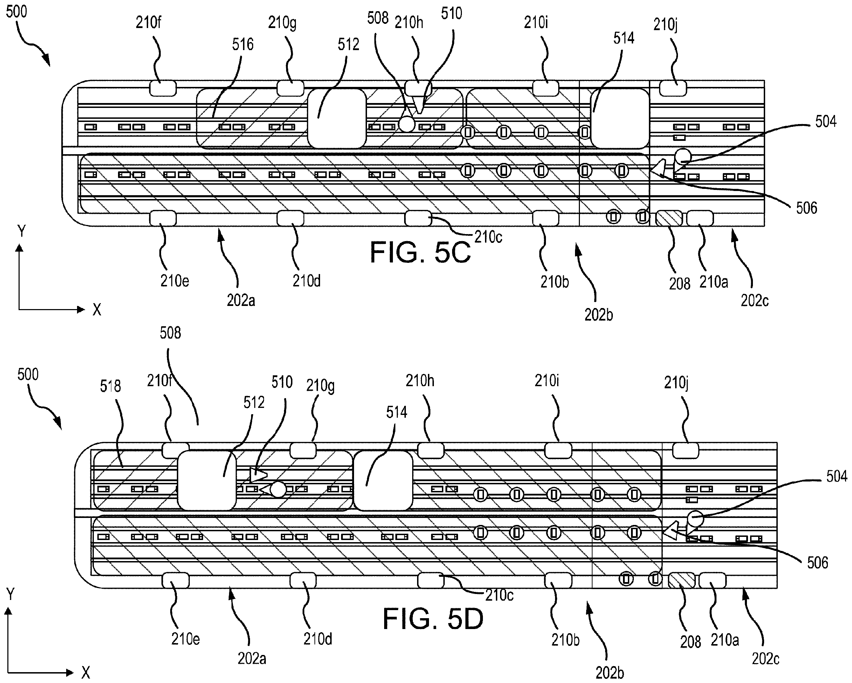

Referring to FIG. 5B, first user 504 moves first cargo 512 longitudinally (e.g., the negative x-direction) along cargo loading system 200 in section 202a to make room to load a second cargo 514. Second user 508 places second device 510 near (e.g., within 10 cm or 4 inches) zone access point 210h to authenticate second device 510 and gain control of a second zone 516 (illustrated in FIG. 5C). Once second device 510 is authenticated to control second zone 516, first device 506, and by extension first user 504, is locked out second zone 516 and cannot control second zone 516. This improves the safety of second user 508 by locking other users (e.g., first user 504) out of controlling second zone 516. This also improves the efficiency of the operators (e.g., first user 504 and second user 508) because they can both control their respective zones.

Referring to FIG. 5C, second user 508, and more specifically, second device 510 has control of second zone 516. First user 504, and more specifically, first device 506, has control of the remainder of the cargo loading system 200. This allows second user 508 to move first cargo 512 into place while first user 504 moves second cargo 514 toward second zone 516, but without entering second zone 516.

Referring to FIG. 5D, second user 508 authenticates second device 510 to control a third zone 518 by placing second device 510 near (e.g., within 10 cm or 4 inches) of zone access point 210g. As illustrated, third zone 518 partially overlaps second zone 516. Each zone access point 210a-210j may provide authentication and access to control a zone within cargo loading system 200. In various embodiments, each zone within cargo loading system 200 may overlap, at least partially, allowing an operator (e.g., second user 508) to move cargo (e.g., first cargo 512) longitudinally (e.g., the x-axis) to be placed for travel in a safe manner. In various embodiments, there may be no overlap in zones within cargo loading system 200. As illustrated, second user 508, using second device 510, is able to move first cargo 512 into place while first user 504, using first device 506, is able to move second cargo 514 into position to be moved by second user 508. Again, first user 504, and more specifically, first device 506 cannot control third zone 518 while second device 510 is authenticated to control third zone 518.

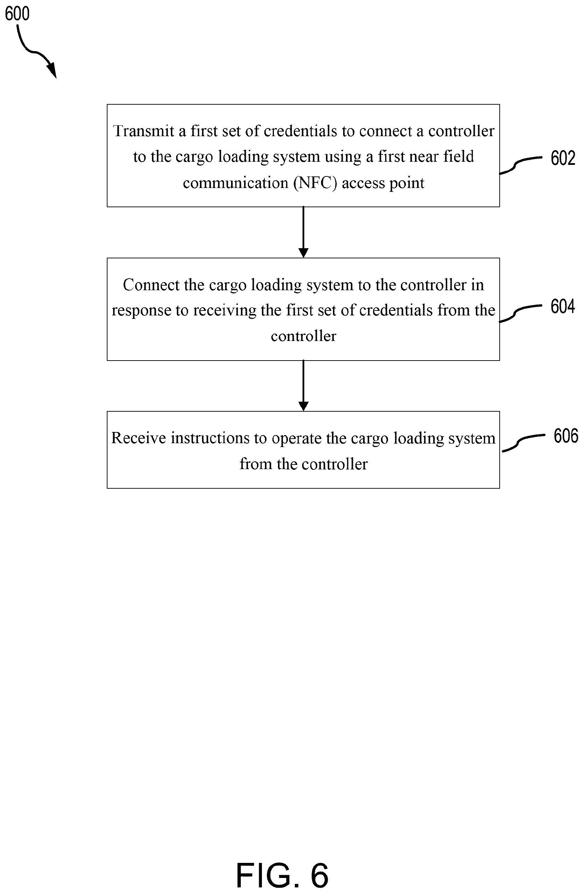

Referring now to FIG. 6, in accordance with various embodiments, a method 600 for controlling access to a cargo loading system 200 is illustrated. The cargo loading system 200 may include a microcontroller, controller, processor, or other device for handling communications and controlling conveyance surface 202, for example. The processor may comprise one or more processors configured to implement various logical operations in response to execution of instructions, for example, instructions stored on a non-transitory, tangible, computer-readable medium. The one or more processors can be a general purpose processor, a microprocessor, a microcontroller, a digital signal processor (DSP), an application specific integrated circuit (ASIC), a field programmable gate array (FPGA) or other programmable logic device, discrete or transistor logic, discrete hardware components, or any combination thereof. The processor may further comprise memory to store data, executable instructions, system program instructions, and/or controller instructions to implement the control logic of the processor.

System program instructions and/or controller instructions may be loaded onto a non-transitory, tangible computer-readable medium having instructions stored thereon that, in response to execution by the processor, cause the processor to perform various operations. The term "non-transitory" is to be understood to remove only propagating transitory signals per se from the claim scope and does not relinquish rights to all standard computer-readable media that are not only propagating transitory signals per se.

At block 602, the processor controlling the cargo loading system transmits a first set of credentials to connect a controller to the cargo loading system using a first near field communication (NFC) access point.

At block 604, the processor connects the cargo loading system to the controller in response to receiving the first set of credentials from the controller.

At block 606, the processor receives instructions to operate the cargo loading system from the controller.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, Band C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 10%, within 5%, within 1%, within 0.1%, or within 0.01% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 10% of, within 5% of, within 1% of, within 0.1% of, and within 0.01% of a stated amount or value.

Finally, it should be understood that any of the above described concepts can be used alone or in combination with any or all of the other above described concepts. Although various embodiments have been disclosed and described, one of ordinary skill in this art would recognize that certain modifications would come within the scope of the invention defined by the claims.

## Claims

1. A controller, comprising:
a processor;
a memory operatively coupled to the processor, the memory comprising instructions stored thereon that, when executed by the processor, cause the processor to:
receive authentication credentials for controlling a cargo handling system (200) via an access point (208), the access point using a short-range wireless communication protocol;
connect to the cargo handling system via a wireless communication protocol;
receive control of the cargo handling system; and
send commands to the cargo handling system.

2. The controller of claim 1, wherein the short-range wireless communication protocol is a near field communication protocol.

3. The controller of claim 1 or 2, wherein the instructions, when executed by the processor, further cause the processor to:
send a request for normal access and control of the cargo handling system.

4. The controller of any preceding claim, wherein the instructions, when executed by the processor, further cause the processor to:
send a request for advanced access and control of the cargo handling system.

5. The controller of any preceding claim, wherein the instructions, when executed by the processor, further cause the processor to:
transmit a cargo load plan to the cargo handling system via the short-range wireless communication protocol.

6. The controller of any preceding claim, wherein the instructions, when executed by the processor, further cause the processor to:
receive at least one of maintenance logs, use logs, and cargo information from the cargo handling system via the short-range wireless communication protocol.

7. The controller of any preceding claim, wherein the instructions, when executed by the processor, further cause the processor to:
receive from the cargo handling system via the access point access to a zone of the cargo handling system, the zone being a subset of the cargo handling system, and optionally wherein the access to the zone of the cargo handling system is exclusive access to the zone of the cargo handling system.

8. The controller of claim 7, wherein the instructions, when executed by the processor, further cause the processor to:
request, from the cargo handling system, access to a second zone, the second zone being different than the first zone, the request being via a second access point using the short-range wireless communication protocol, the second access point being different the access point; and
receive access to the second zone, wherein the controller releases access to the zone in response to receiving access to the second zone.

9. A cargo handling system, comprising:
a conveyance surface (202) configured to move cargo;
a near field communication, NFC, access point (208); and
an NFC enabled device (214) configured to connect to the cargo handling system in response to receiving authentication information from the NFC access point, the NFC enabled device configured to transmit and receive information about the conveyance surface via the NFC access point.

10. The cargo handling system of claim 9, wherein the NFC enabled device includes a cargo load plan, the NFC enabled device configured to transmit the cargo load plan to the cargo handling system, and optionally wherein the cargo handling system is configured to verify the cargo load plan.

11. The cargo handling system of claim 9 or 10, wherein the NFC enabled device is configured to receive data about the conveyance surface from the cargo handling system, the data being received by a wireless connection between the NFC access point and the NFC enabled device, and optionally wherein the data includes at least one of maintenance data, lifecycle data, and cargo status.

12. A method of controlling access to a cargo loading system, the method comprising:
transmitting, by a processor, a first set of credentials to connect a controller to the cargo loading system (200) using a first near field communication, NFC, access point (208);
connecting, by the processor, the cargo loading system to the controller in response to receiving the first set of credentials from the controller; and
receiving, by the processor, instructions to operate the cargo loading system from the controller.

13. The method of claim 12, further comprising:
transmitting, by the processor, a second set of credentials to control a zone within the cargo loading system to the controller using a second near field communication, NFC, access point;
granting, by the process, control of the zone to controller; and
restricting, by the process, control of the zone to other controllers and/or
further comprising:receiving, by the processor, a cargo load plan for the cargo loading system from the controller.

14. The method of claim 12 or 13, further comprising:
transmitting, by the processor, maintenance data for the cargo loading system via the first NFC access point in response to a request from the controller, and/or
further comprising:
receiving, by the processor, an authentication code from the controller; and
granting, by the processor, advanced access to the cargo loading system in response to receiving the authentication code.

15. The method of claim 12, 13 or 14, further comprising:
transmitting, by the processor, a second set of credentials to connect a second controller to the cargo loading system using the first NFC access point;
receiving, by the processor, a request for access to a zone of the cargo loading system from the second controller through a second NFC access point; and
restricting, by the processor, control of the zone to the second controller in response to the request.
